# EUROPÄISCHE PATENTSCHRIFT

(11) **EP 0 434 085 B1**
(45) Veröffentlichungstag und Bekanntmachung des Hinweises auf die Patenterteilung: **27.07.1994**
(21) Anmeldenummer: 90125103.3
(22) Anmeldetag: 21.12.1990
(51) Int. Cl.: G01N 27/41, G01N 27/419

(54) **Sensorsystem**
Sensor system
Système capteur

(30) Priorität: 22.12.1989 DE 3942664
(43) Veröffentlichungstag der Anmeldung: 26.06.1991
(73) Patentinhaber: ULTRAKUST electronic GmbH, 94239 Gotteszell (DE)
(72) Erfinder: Böhm, Alfred, W-8374 Viechtach (DE)
(74) Vertreter: Heim, Hans-Karl, Dipl.-Ing.

(56) Entgegenhaltungen:
- EP-A- 0 361 692
- EP-A- 0 392 447
- DE-A- 2 946 775
- DE-A- 3 522 867
- DE-A- 3 702 838
- US-A- 4 683 049
- US-A- 4 851 103

## Beschreibung

Die Erfindung betrifft ein in einem Meßgehäuse vorgesehenes Sensorsystem gemäß Oberbegriff des Anspruchs 1.

Ein gattungsgemäßes Sensorsystem ist aus der US-PS 4,851,103 bekannt, welches über eine parallele Anordnung von Sauerstoffsensoren verfügt, wobei die beiden Sensoren bei unterschiedlichen Spannungen betrieben werden, die beidseitig des Spannungswertes für die Zusetzung von Wasser liegen.

Weitere Sensorsysteme sind beispielsweise aus der EP 0 166 530 B1 und aus der DE 37 02 838 A1 bekannt.

Das Prinzip dieser bekannten Sensorsysteme gestattet die Messung des Sauerstoff-Partialdruckes in einem Gas oder in einer Gasmischung. Hierüber läßt sich dann auch die Feuchte im Gas bestimmen.

Diese Sensorsysteme weisen für den einzelnen Sensor eine sauerstoffleitende Platte auf, die insbesondere aus Zirkonia (ZrO₂) hergestellt ist. Bei Anlegen einer Spannung an die Elektroden auf dieser Platte wird ein Abpumpen des Sauerstoffs aus dem Innenraum des Diffusionsgehäuses bewirkt. Dieser durch die angelegte Spannung erreichte Pumpeffekt ist dabei größer als die Menge des durch die Gas-Diffusionsöffnung des Sensors eintretenden Sauerstoffs. Der durch die Zirkoniaplatte fließende Strom ist daher abhängig von der Rate der durch die Zirkoniaplatte diffundierenden Sauerstoffionen. Nachdem die Durchflußmenge des Sauerstoffs jedoch aufgrund der Gas-Diffusionsöffnung begrenzt ist, stellt sich zunächst eine Sättigung des Stroms bei einer bestimmten Spannung ein, wobei in dieser Phase die Anzahl der durch die Zirkoniaplatte diffundierenden Sauerstoffionen der Menge des durch die Gas-Diffusionsöffnung eintretenden Sauerstoffs entspricht.

Bei dem Ziel, die Feuchte eines entsprechenden Gases bzw. von Luft mit einem derartigen Sensorsystem festzustellen, ist zu berücksichtigen, daß primär der Sauerstoff-Partialdruck durch den Wassergehalt des zu messenden Gases vermindert wird. Hierdurch bildet sich der Bereich der Stromsättigung schon bei geringerer Stromstärke aus.

Bei einer weiteren Erhöhung der Spannung zwischen den Elektroden an der Zirkoniaplatte bleibt der Stromfluß zunächst aufgrund der Diffusion des Sauerstoffs durch die Gas-Diffusionsöffnung konstant, bis aufgrund der höheren Spannung ein Zerfall des Wasserdampfes in Sauerstoff und Wasserstoff erfolgt. Dieser aus der Dissoziation des Wasserdampfes resultierende Sauerstoff bewirkt nunmehr eine Erhöhung des Stromflusses. Es bildet sich dadurch ein weiterer Stromsättigungsbereich, der in seinem Absolutwert über dem Stromfluß bei einem gleichen Gas ohne Feuchtigkeit liegt.

Auf diese Weise erhält man für die Berechnung der Feuchte eines feuchten, sauerstoffhaltigen Gases zwei Sättigungsstrombereiche, deren Stromdifferenz die Bestimmung des Feuchtigkeitsgehaltes in dem zu messenden Gas zuläßt.

Bei diesen bekannten Vorrichtungen ist es nicht zufriedenstellend, daß die Genauigkeit der Messung abnimmt, wenn Temperaturschwankungen bei dem zu messenden Gas auftreten.

Weiterhin müssen die bekannten Sensoren auf eine bestimmte Meßgastemperatur einkalibriert werden, wodurch für eine Verwendung des Sensors bei einer hohen Meßgastemperatur eine neue Kalibrierung des Sensors erforderlich ist.

Es ist daher **Aufgabe** der Erfindung, ein Sensorsystem der gattungsgemäßen Art zu schaffen, das eine präzise Messung eines zu messenden Gases über einen großen Temperatur- und Feuchtigkeitsbereich erlaubt.

Diese Aufgabe wird erfindungsgemäß durch die Merkmale des kennzeichnenden Teils im Anspruch 1 gelöst. Vorteilhafte Weiterbildung der Erfindung sind Gegenstand der Unteransprüche.

Die Erfindungsidee besteht darin, ein zu messendes Gas gleich welcher Feuchte oder Temperatur auf eine bestimmte Temperatur aufzuheizen, so daß den Sensoren nur ein Meßgas mit einer konstanten Temperatur zugeführt wird. Das Diffusionsverhalten des Gases durch die Diffusionsöffnung des Sensors ist damit konstant und eine Messung von Gasen, deren Temperatur schwankt, ist ohne Probleme möglich. Hierfür ist in einem Meßgehäuse eine Temperaturmeß- und -regeleinrichtung angeordnet, die über eine Heizvorrichtung verfügt. Durch diese Temperaturmeß- und -regeleinrichtung wird das den Sensoren zugeführte Gas auf einer konstanten Temperatur gehalten.

Weiterhin ist das Sensorsystem mit zwei räumlich voneinander getrennten Sensoren gleicher Bauart, insbesondere als Zirkoniasensoren, ausgestattet. Hierbei wird ein Sensor auf einem Strom- bzw. Spannungsniveau betrieben, das die Dissoziation des in dem zu messenden Gas enthaltenen Wasserdampfes hervorruft. Der andere, hiervon beabstandete Sensor wird im Gegensatz dazu auf dem niedrigeren Strom- bzw. Spannungsniveau betrieben, das klar getrennt unterhalb des Dissoziationsniveaus liegt und auf dem dementsprechend der aus dem Wasserdampf resultierende Sauerstoff-Partialdruck unberücksichtigt bleiben kann. Die auf dieser Basis ermittelten Ausgangssignale der beiden Sensoren können daher simultan parallel in einem Mikroprozessor verarbeitet werden und lassen sozusagen in Echtzeit direkte Angaben über den Feuchtigkeitsgehalt des zu messenden Gases zu.

Um eine Verfälschung der Meßergebnisse der beiden Sensoren zu vermeiden, werden zweckmäßigerweise zwei getrennte Gasströme gebildet, die den einzelnen Sensoren zugeführt werden. Hierbei ist es vorteilhaft, ein Innengehäuse im eigentlichen Meßgehäuse zu verwenden, das die beiden Sensoren enthält und das entweder eine Kanalisierung auf die beiden Sensoren aufweist oder durch eine Wand in zwei Kanalbereiche getrennt ist.

In einer anderen vereinfachten Ausführungsform werden die beiden Sensoren in der in das Innengehäuse eingeführten Gasströmung hintereinander angeordnet. Hierbei fungiert der erste Sensor sozusagen als "Trocken"-Sensor, während der im Gasstrom dahinterliegende zweite Sensor als "Dissoziations"-Sensor angesehen werden kann. Auch bei dieser Auslegung des Sensorsystems erhält man ohne die bekannten Nachteile eine präzise Aussage zur vorliegenden Feuchtigkeit in dem zu messenden Gas.

Unabhängig von der konstruktiven Ausführungsform der Sensorsysteme ist jedoch sichergestellt, daß sich beide Sensoren in einem Gas bzw. Gasströmung gleicher Temperatur befinden, was durch die vorgesehene Heizungsvorrichtung sowie Temperaturfühler mit entsprechender Regelung erreicht wird.

Die Sauerstoffpumpwirkung der Zirkoniaplatte der Sensoren ist am stärksten bei einer Temperatur von etwa 450° C ausgeprägt. Daher ist mit dem Sensorsystem eine Heizeinrichtung verbunden, die die Sensoren auf dieser Temperatur hält. Hierdurch werden auch größere temperaturbedingte Veränderungen der Diffusionseigenschaften des Sauerstoff durch die Zirkoniaplatten vermieden.

Eine Beeinflussung des Diffusionsverhaltens kann jedoch durch eine unterschiedliche Temperatur des zu messenden Gases hervorgerufen werden. Daher ist vor der Gas-Diffusionsöffnung eine Temperaturmeß- und -regeleinrichtung angeordnet, die das zu messende Gas auf eine bestimmte, definierte Temperatur aufheizt oder abkühlt und somit Temperaturschwankungen bei dem zu messenden Gas kompensiert bzw. die Messung von Gasen in einem großen Temperaturbereich zuläßt. Dies ist sehr vorteilhaft, da der jeweilige Sensor nicht für jede Temperatur des Meßgases neu kalibriert werden muß.

In einer Weiterbildung ist das Sensorsystem in einem Meßgehäuse angeordnet, das eine Heizvorrichtung im Innern aufweist. Dieses Meßgehäuse muß ständig von dem zu messenden Gas durchströmt werden, damit sich in dem Meßgehäuse kein "Mikroklima" ausbildet, d.h. damit sich in dem Meßgehäuse die Feuchtigkeit des zu messenden Gases bei der Aufheizung nicht aufgrund mangelnder Konvektion ändert. Einige Wände des Meßgehäuses sind daher zumindest gasdurchlässig ausgebildet, wobei durch die Anordnung des Meßgehäuses in dem Meßgas oder durch eine Absaugvorrichtung dafür gesorgt wird, daß sich durch das Meßgehäuse eine Zwangskonvektion des zu messenden Gases einstellt.

Der Temperaturfühler für die Temperaturmeß- und -regeleinrichtung ist in vorteilhafter Weise zwischen der Heizvorrichtung und dem jeweiligen Sensor angeordnet, damit die Temperatur des zu messenden Gases am Eingang der Gas-Diffusionsöffnung exakt eingestellt werden kann.

Um die Ausbildung unterschiedlich warmer Zonen in dem Meßgehäuse zu unterbinden, sind die Heizelemente der Heizvorrichtung nahe der Innenwände des Meßgehäuses angeordnet und umgeben ein Innengehäuse, in dem die Sensoren angeordnet sind, zumindest größtenteils.

Durch das derart ausgebildete Meßgehäuse wird die Temperatur des zu messenden Gases auf den beabsichtigten Wert erhöht, wobei aufgrund der durch das Meßgehäuse erfolgenden Zwangskonvektion eine Veränderung der Feuchte des zu messenden Gases in dem Meßgehäuse ausgeschlossen wird.

Die gasdurchlässigen Wände des Meßgehäuses können durch eine PTFE-Folie ausgebildet sind, wodurch die Wände des Meßgehäuses gleichzeitig als Filter dienen und eine Verschmutzung der Sensoren, insbesondere der Gas-Diffusionsöffnung der Sensoren, verhindern.

Mit dem Ein- und Ausschalten des Sensorsystems kann das Meßgehäuse von einer Zuführung des zu messenden Gases abgeschaltet und an eine Trockengaszufuhr angeschlossen werden, um die Ausbildung einer Restfeuchtigkeit im Diffusionsgehäuse zu verhindern. Diese Restfeuchtigkeit kann beim Aufheizen der Sensoren zu deren Zerstörung führen. Des weiteren kann die Feuchtigkeit des zu messenden Gases beim Abkühlen des Sensorsystems in dem Diffusionsgehäuse auskondensieren, wenn vor dem Abkühlen nicht auf die Zufuhr eines trockenen Gases umgeschaltet wird. Die Heizeinrichtung für das Sensorsystem ist daher mit einer Steuerung versehen, die die Umschaltung der Gaszufuhr und die Steuerung der Abkühl-bzw. Aufheizgeschwindigkeiten der Sensoren steuert.

Die Elektroden der Sensoren sind mit einem Funktionsgenerator verbunden, der die beiden Sensoren auf unterschiedlichen Spannungsniveaus konstant hält, wobei die Spannungswerte in den Stromsättigungsbereichen liegen, die dem Sauerstoff-Partialdruck mit und ohne zusätzlicher Hydrolyse der Feuchtigkeit entsprechen.

Zum Errechnen des Wasserdampf-Partialdrucks ist der Funktionsgenerator in vorteilhafter Weise mit einer Elektronik verbunden, die die Werte des Stromflusses der Sensoren mit abgespeicherten Strom-Feuchtigkeitsgehalt-Kennlinien vergleicht und aus diesen den Wasserdampf-Partialdruck des zu messenden Gases errechnet.

Durch die Erfindung ist es nicht notwendig, das Sensorsystem auf eine bestimmte Meßgastemperatur zu kalibrieren, sondern die Temperatur des Meßgases wird der einmal eingestellten Temperatur des Sensorsystems angepaßt.

Man kann hierdurch z.B. die Temperatur auf 120° C eineichen und das Meßgas über eine geeignete Filter- und Abkühl- bzw. Aufheizvorrichtung auf die Eichtemperatur des Sensorsystems von 120° C regeln, wobei die Meßgastemperatur über einen Temperaturfühler erfaßt wird, der wiederum zur Regelung der Temperatur verwendet wird. Die Meßgastemperatur wird so hoch gewählt, daß ein Auskondensieren von Wasserdampf oder auch anderen in dem Meßgas enthaltenen Substanzen (z. B. Ölen) vermieden werden kann.

Sensoren bis zu einer Einsatztemperatur von 150° C enthalten ein eingebautes Filter aus PTFE-Folie, das zwar Wasserdampf durchläßt, aber Kondensationstropfen, die den Sensor zerstören könnten, abhält. Dadurch ist ein Einsatz des Sensors bis zum "taupunktnahen" Bereich möglich.

Das für die Feuchtemessung verwendete Gas kann bei umweltgefährdenden Prozessen rückgeführt werden, da die abgesaugte Menge des zu messenden Gases sehr gering ist. Die Absaugung erfolgt durch einen Ejektor oder eine geeignete Pumpe. Je nach Meßbedingungen kann auch der durch natürliche Konvektion oder Diffusion auftretende Gasaustausch ausreichen. Eventuell ist eine Strömung des zu messenden Gases durch das Sensorsystem auch durch reinen Konvektionsbetrieb möglich. Die Einstellung einer definierten Durchflußrate mittels einer Absaugvorrichtung hat jedoch den Vorteil, daß die Durchflußrate des Meßgases konstant gehalten wird, was eventuell einen gewissen Einfluß auf das Meßergebnis haben kann. Meßfehler werden hierdurch minimiert und die Durchflußrate des Meßgases wird begrenzt, um eine starke Abkühlung der Meßapparatur bzw. des Meßgases zu verhindern.

Bei Erhalt des Wasserdampf-Partialdruckes eines Meßgases läßt sich weiterhin auf den im Meßgas vorhandenen Sauerstoff-Partialdruck zurückrechnen, wenn man über die Meßcharakteristik der Sensoren verfügt, die man durch Eichmessungen erhält.

Vorteilhafte Weiterbildungen der Erfindung sind Gegenstand der Unteransprüche. Die Erfindung wird nachfolgend beispielhaft anhand schematischer Zeichnungen beschrieben. In dieser zeigen:
- Fig. 1: einen Querschnitt durch ein erstes Sensorsystem;
- Fig. 2: einen Schnitt II-II nach Fig. 1;
- Fig. 3: eine Vorrichtung zur Messung der Feuchtigkeit eines Gasgemisches mit eingebautem Sensorsystem;
- Fig. 4: eine Schaltung eines einzelnen Sensors zur Bestimmung des Wasserdampf-Partialdruckes;
- Fig. 5: ein mit dem Sensor aus Fig. 4 erhaltenes Spannungs-Strom-Diagramm zur Bestimmung des Wasserdampf-Partialdrucks aus den erhaltenen Kenngrößen;
- Fig. 6: eine schematische Darstellung des Strom-Feuchtigkeits-Diagramms der beiden im Sensorsystem vorgesehenen Sensoren;
- Fig. 7: einen axialen Schnitt durch ein Beispiel eines mit zwei räumlich getrennten Sensoren ausgestatteten Sensorsystems;
- Fig. 8: einen Schnitt längs der Linie VII-VII nach Fig. 7;
- Fig. 9: ein weiteres Beispiel eines mit zwei separierten Sensoren arbeitenden Sensorsystems;
- Fig. 10: einen Vertikalschnitt durch das Meßgehäuse nach Fig. 9 und
- Fig. 11: ein weiteres Ausführungsbeispiel eines mit zwei getrennten Sensoren arbeitenden Sensorsystems mit in der Gasströmung hintereinander geschalteten Sensoren.

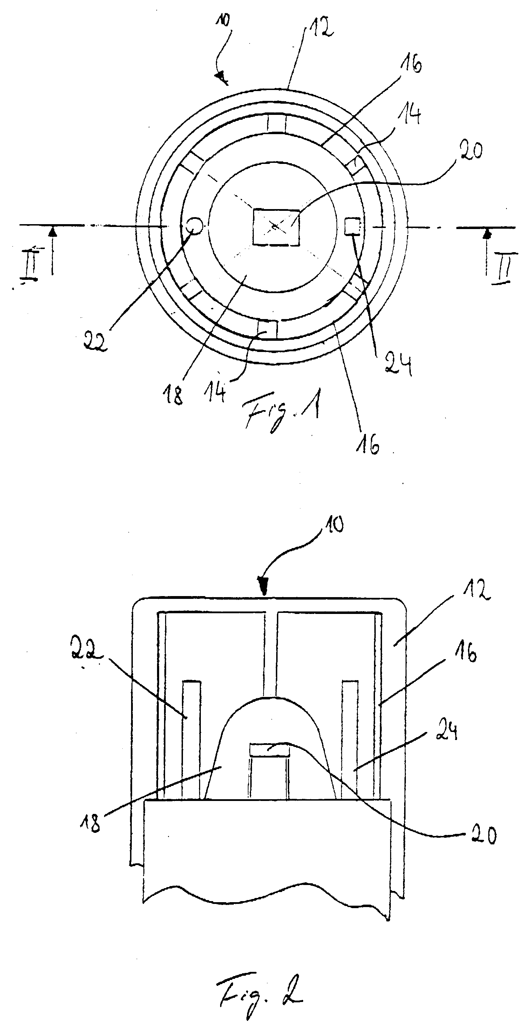

Fig. 1 zeigt ein Sensorsystem 10 zur Bestimmung des Wasserdampf-Partialdruckes eines zu messenden Gases oder Gasgemisches.

Das Sensorsystem 10 hat ein topfartiges, zylindrisches Meßgehäuse 12, dessen Wände gasdurchlässig und als Filter ausgebildet sind. Im Bereich der Innenwände des Meßgehäuses 12 sind die Heizelemente 14 einer Heizvorrichtung angeordnet. Die Heizelemente 14 umgeben den Innenbereich des Meßgehäuses 12 ringförmig und haben in Richtung der Zylinderachse des Meßgehäuses 12 verlaufende Durchbrechungen 16, um einen insbesondere radialen Durchtritt des zu messenden Gases zu ermöglichen. Im Innern des Meßgehäuses 12 ist konzentrisch zu den Wänden des Meßgehäuses 12 und den Heizelementen 14 ein halbkugelförmiger Filter 18 aus PTFE-Folie angeordnet, der lediglich für Gase und Wasserdampf durchlässig ist. Unter dem Filter befindet sich eine Sauerstoff-Sensoreinheit 20 mit zwei Sensoren, ein Temperaturfühler 22 und ein Strömungswächter 24.

Der Temperaturfühler 22 ist direkt mit der Heizvorrichtung gekoppelt und bewirkt, daß im Innern des Meßgehäuses 12 immer eine konstante, definierte Temperatur herrscht. Der Strömungswächter 24 registriert die innerhalb des Meßgehäuses 12 vorhandene Gasströmung und meldet ein Fehlersignal bei Ausbleiben der Gasströmung. Auf diese Weise wird die Ausbildung eines Mikroklimas verhindert, bei dem sich der Wasserdampf-Partialdruck des unter dem Meßgehäuse 12 befindlichen Gases auf einen anderen Wert einstellen könnte als er im Gesamtvolumen des zu messenden Gases vorhanden ist. Der einzelne Sensor wird auf einer konstanten Temperatur von etwa 450° C gehalten.

Durch die in den Fig. 1 und 2 dargestellte Sensoranordnung wird das Gas ohne Veränderung seines Wasserdampf-Partialdruckes auf eine definierte Temperatur erwärmt und der Sensoreinheit 20 zugeführt. Selbstverständlich kann an Stelle der Heizvorrichtung auch eine Klimavorrichtung angeordnet sein, wobei die Heizelemente 14 dann als Heiz- bzw. Kühlelemente ausgebildet wären. Eine derartige Vorrichtung würde die Feuchtemessung eines Gases erlauben, das eine höhere Temperatur als die erwünschte Meßgastemperatur aufweist.

Durch den PTFE-Filter werden Dämpfe von organischen Verbindungen von der Sensoreinheit 20 ferngehalten, die zu einer Verstopfung der Gas-Diffusionsöffnung der Sensoren führen könnten. Für höhere Temperaturen werden andere Filter verwendet.

Durch die Heizvorrichtung mit den Heizelementen 14 kann man das zu messende Gas z.B. auf eine Temperatur von 120° C bis zu 300° C (je nach Einstellung der Sensoreinheit) aufheizen, was die Messung eines Gases mit einer beliebigen, darunterliegenden Temperatur ermöglicht, ohne daß zusätzliche Kalibrierungen vorgenommen werden müßten.

Fig. 3 zeigt das Sensorsystem 10, eingebaut in eine Meßapparatur 30 zur Feuchtemessung eines Meßgases. Das Meßgas befindet sich in einem Reaktionsbehälter 32, der eine Ausgangsleitung 36 und eine Eingangsleitung 34 zur Meßanordnung 30 aufweist. Über steuerbare Ventile 38,40 sind die Ausgangsleitung 36 und die Eingangsleitung 34 mit jeweils einem T-Anschlußstück 42,44 verbunden, deren vertikale Schenkel abermals über steuerbare Ventile 46,48 mit einem Meßrohr 50 verbunden sind. In diesem Meßrohr 50 befindet sich das Sensorsystem 10 und ein Umwälzventilator 52. An das mit der Eingangsleitung 34 verbundene T-Anschlußstück 44 ist über ein weiteres steuerbares Ventil 54 eine Trockengasquelle 56 angeschlossen. Das mit der Ausgangsleitung 36 verbundene T-Anschlußstück 42 ist weiterhin über ein steuerbares Ventil 58 mit einer Abluft- oder Entsorgungseinrichtung verbunden. Das Sensorsystem 10 ist an eine Steuereinheit 60 angeschlossen, die den Betrieb der Sensoreinheit 20 regelt und die Stellung der steuerbaren Ventile 38,40,46,48,54,58 steuert. In dem Reaktionsbehälter 32 sind ein zusätzlicher Temperaturfühler 32 und ein Drucksensor 31 angeordnet, um die tatsächliche Temperatur und den tatsächlichen Druck des Meßgases außerhalb der Meßapparatur festzustellen, um hieraus Korrekturwerte für die Feuchtigkeit des Gases abzuleiten und andere Kenngrößen (Taupunkt) zu errechnen.

Nachfolgend wird die Wirkungsweise der Meßanordnung 30 beschrieben.

Beim Einschalten der Meßanordnung werden die Ventile 38,40 zwischen den T-Anschlußstücken 42,44 und dem Reaktionsbehälter 32 geschlossen. Die restlichen Ventile 46,48,54,58 werden geöffnet und der Ventilator 52 wird in Betrieb gesetzt. Hierdurch wird dem Sensorsystem 10 ein trockenes Gas zugeführt. Dies verhindert ein Eindringen von Feuchtigkeit in die Sensoren und damit eine Zerstörung des Sensors in der nachfolgenden Aufheizphase. Wurde das Sensorsystem 10 in einem vorausgehenden Meßzyklus bereits in Trockengas abgekühlt, so brauchen lediglich die Ventile 46 und 48 an den Längsenden des Meßrohres 50 geschlossen bleiben, bis die Betriebstemperatur der Sensoreinheit 20 erreicht ist. Nun werden die Ventile 54 und 58 geschlossen und die Ventile 46,48,38,40 zur Verbindung des Meßrohres 50 mit dem Reaktionsbehälter 32 werden geöffnet. Durch die Sogwirkung des Ventilators 52 wird eine Gasströmung in dem Meßrohr 50 eingestellt. Der im Sensorsystem 10 angeordnete Temperaturfühler 22 mißt die Temperatur des durchströmenden Meßgases und gibt das Meßsignal an die Steuereinheit 60 weiter, die über eine Heizvorrichtung mit den Heizelementen 14 die Temperatur des Meßgases auf einen Sollwert einregelt. Hierauf kann in nachfolgend noch näher beschriebenen Weise die Feuchtemessung gestaffelt werden, bis die Messung beendet werden soll.

In diesem Fall werden die Ventile 38,40 zur Verbindung der T-Anschlußstücke 42,44 mit dem Reaktionsbehälter 32 geschlossen und das Meßrohr 50 wird wieder an die Trockengaszufuhr 56 angeschlossen. Das Meßrohr 50 wird solange mit Trockengas geflutet, bis die Restfeuchtigkeit annähernd Null ist. Dann werden die Ventile 46 und 48 geschlossen und die Heizeinrichtung für die Sensoreinheit wird abgeschaltet. Das Absinken der Feuchtigkeit kann dabei über die Sensoreinheit 20 gemessen werden. Durch das Abkühlen im trockenen Gas wird eine Kondensation der Feuchtigkeit an den Innenwänden des Diffusionsgehäuses des Sensors verhindert, was ein Aufsprengen des Sensor bei einem nachfolgenden Aufheizvorgang zur Folge hätte.

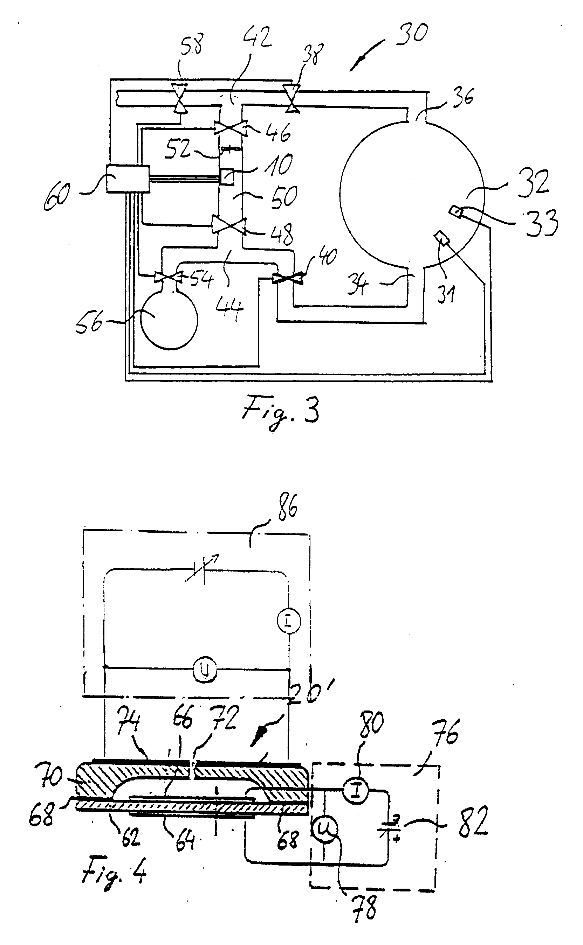

Fig. 4 zeigt einen der Sensoren 20' der Sensoreinheit 20, wie er in einem Sensorsystem 10 verwendbar ist. Der Sensor 20' besteht aus einer stabilisierten Zirkoniaplatte 62, die eine Sauerstoffdiffusion ermöglicht und die auf ihren gegenüberliegenden Oberflächen mit flächigen Elektroden 64,66 versehen ist. Auf eine Seite der Zirkoniaplatte 62 ist mittels einer Glasfritte 68 ein topfförmiges Diffusionsgehäuse 70, Vorzugsweise aus Glas, gasdicht verbunden. Das Diffusionsgehäuse 70 weist an seiner Oberseite eine zentrale Gas-Diffusionsöffnung 72 auf. Auf der Außenseite des Diffusionsgehäuses 70 ist eine Heizwicklung 74 aufgedampft. Die flächigen Elektroden 64,66 sind vorzugsweise poröse Platinelektroden, die den Durchtritt von Sauerstoffionen durch die Zirkoniaplatte 62 erlauben.

Die Elektroden 64,66 sind mit einem Funktionsgenerator 76 verbunden, der ein Bestandteil der Steuereinheit 60 aus Fig. 3 ist. Der Funktionsgenerator 76 verfügt über ein Spannungsmeßgerät 78 zur Bestimmung der an den Elektroden 64,66 anliegenden Spannung und über ein Strommeßgerät 80 zur Bestimmung des zwischen den Elektroden 64,66 fließenden Stroms. Des weiteren kann der Funktionsgenerator 76 eine steuerbare Spannungsquelle 82 aufweisen, mit der in der Zirkoniaplatte 62 ein elektrisches Feld erzeugt werden kann, das eine Diffusion von Sauerstoffionen aus dem Diffusionsgehäuse 70 nach außen bewirkt.

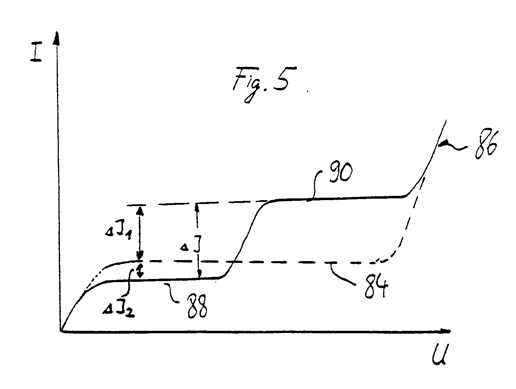

Die Gas-Diffusionsöffnung 72 des Diffusionsgehäuses 70 ist derart dimensioniert, daß bei Anlage eines geeignetes elektrischen Feldes zwischen den Elektroden 64,66 die Diffusion der Sauerstoffionen durch die Zirkoniaplatte 62 größer ist als die entsprechende Diffusion des Sauerstoffs durch die Gas-Diffusionsöffnung 72 in das Diffusionsgehäuse 70. Hierdurch ist die Gasdiffusion durch die Gas-Diffusionsöffnung 72 der die Geschwindkeit bestimmende Schritt, der bei Messung eines trockenen Meßgases zur Ausbildung eines Stromsättigungsbereichs 84 in die Stromspannungskennlinie des Sensors führt (Fig. 5).

Die Gas-Diffusionsöffnung 72 hat einen Durchmesser von wenigen O₂-Molekülen. Das Diffusionsgehäuse kann auch porös ausgebildet sein und so das Nachdiffundieren von O₂ ermöglichen. In diesem Falle werden viele, in ihrer Form nicht definierte Gas-Diffusionsöffnungen in dem Diffusionsgehäuse ausgebildet.

Wird nun dem gleichen Gas ein Wasserdampf-Partialdruck zugesetzt, so erhält man die in Fig. 5 durchgehend gezeichnete Strom-Spannungs-Kennlinie 86. In dieser Strom-Spannungs-Kennlinie 86 bildet sich ein erster Sättigungsstrombereich 88 aus, in dem der Stromfluß über einen größeren Spannungsbereich konstant ist. Die Höhe des Stromflusses in diesem Bereich 88 liegt unterhalb der des trockenen Gases, weil der Sauerstoff-Partialdruck aufgrund des zusätzlich vorhandenen Wasserdampf-Partialdruckes geringer ist. Erhöht man die Spannung weiter, so erhält man einen zweiten Strom-Sättigungsbereich 90, der daraus resultiert, daß sich der durch die Gas-Diffusionsöffnung 72 eintretende Wasserdampf in Wasserstoff und Sauerstoff zersetzt, wobei der Sauerstoff noch zusätzlich zum ohnehin vorhandenen Sauerstoff-Partialdruck des Meßgases zum Stromfluß beiträgt. Die Differenz △I zwischen dem Stromfluß der beiden Strom-Sättigungsbereiche 88 und 90 ist ein Maß für den im Meßgas vorhandenen Wasserdampf-Partialdruck.

Der Wasserdampf-Partialdruck kann auch durch den Abstand, d.h. die Stromdifferenz △I₁ zwischen dem Stromsättigungsbereich 90, dem Stromsättigungsbereich 84 des trockenen Meßgases und/oder die Stromifferenz △I₂ zwischen dem Stromsättigungsbereich 84 des trockenen Meßgases und dem Stromsättigungsbereich 88 herangezogen werden.

Die Zirkoniaplatte 62 ist für den Fachmann in geläufiger Weise mit Yttrium oder Kalzium stabilisiert.

Die Zwangskonvektion durch das Meßgehäuse kann durch eine entsprechende Anordnung der Heizelemente erreicht werden. Hierbei kann die beim Aufwärmen des Meßgases entstehende Kaminwirkung der Meßapparatur ausgenutzt werden.

Eine Veränderung der Anstiegs- und Abstiegszeit der den Elektroden 64,66 zugeführten Spannung könnte in Form einer Dreiecks-Sinus- oder Rechtecks-Charakteristik erfolgen. Zusätzlich zur Heizung 16 kann auch die Platinheizelektrode 74 geregelt werden, indem ihr Innenwiderstand gemessen wird und dieser über eine geeignete Regeleinrichtung konstant gehalten wird.

In Fig. 5 ist auf der Abszisse die mit dem Spannungsmeßgerät 78 aus Fig. 4 gemessene, an den Elektroden 64,66 anliegende Spannung U aufgetragen. Die Ordinate gibt den mit dem Strommeßgerät 80 gemessenen Strom I wieder.

Unter Berücksichtigung der Kenntnisse nach Fig. 5, wonach zwei Sättigungsstrombereiche 88 und 90 für den Sauerstoff-Partialdruck ohne Disassoziation von Wasserstoffmolekülen und mit Disassoziation bekannt sind, wird das Sensorsystem 10 bzw. 100 mit zwei räumlich getrennten Sensoren betrieben. Die Sensoreinheit 20 wird nachstehend zur besseren Unterscheidung in die beiden Sensoren 91 und 92 getrennt.

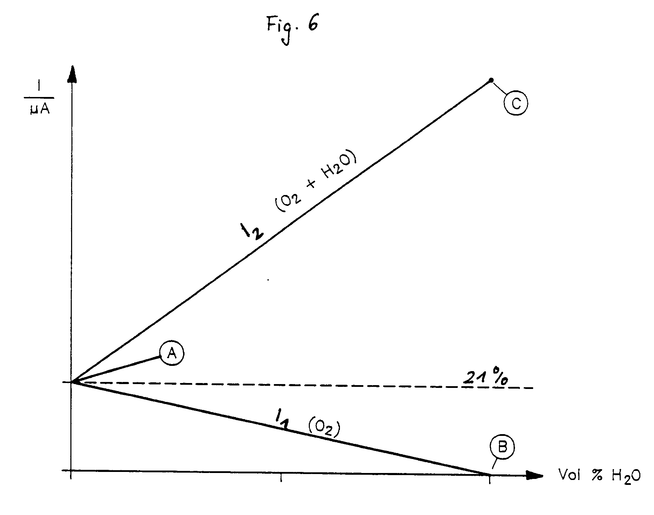

Im Diagramm nach Fig. 6 ist schematisch die Stromkennlinie des Sensors 91 mit I₁ in Abhängigkeit vom Sauerstoffgehalt des Gases bzw. der Luft (Vol.-% H₂O) dargestellt. Weiterhin ist der Stromverlauf I₂ des zweiten Sensors 92 als obere Gerade angezeigt.

Der Punkt A markiert dabei den Zustand der trockenen Luft mit etwa 21% Sauerstoff, so daß man in diesem Bereich von einer nahezu reinen Sauerstoffleitung im Hinblick auf die Sensoren 91 und 92 sprechen kann.

Der Punkt B zeichnet den Sauerstoffgehalt bei wasserdampfgesättigter Luft, bezogen auf den Sensor 91, dessen Stromverlauf I₁ allein den Sauerstoffgehalt ohne Disassoziation des Wasserdampfes wiedergibt. Mit zunehmender Feuchte bzw. zunehmendem Wasserdampfgehalt in dem zu messenden Gas sinkt daher der Strom I₁ etwa linear von einem Anfangswert beim Punkt A auf Null ab.

Einen gerade konträren Verlauf zeigt die Stromkennungslinie I₂ für den zweiten Sensor 92. Da dieser Sensor 92 etwa bei einer Spannung von 1,8 Volt betrieben wird und somit eine Disassoziation des Wasserdampfes im Gas möglich ist, kennzeichnet dieser zweite Stromverlauf I₂ die durch die Disassoziation des Wasserdampfes entstandenen Sauerstoffatome.

Die gemessenen Stromwerte I₁ und I₂ bzw. deren Differenz lassen daher eine präzise Ermittlung der im zu messenden Gas vorhandenen Feuchtigkeit on-line im Echtzeitverfahren zu, wobei die Nachteile, wie eingangs diskutiert, vermieden werden.

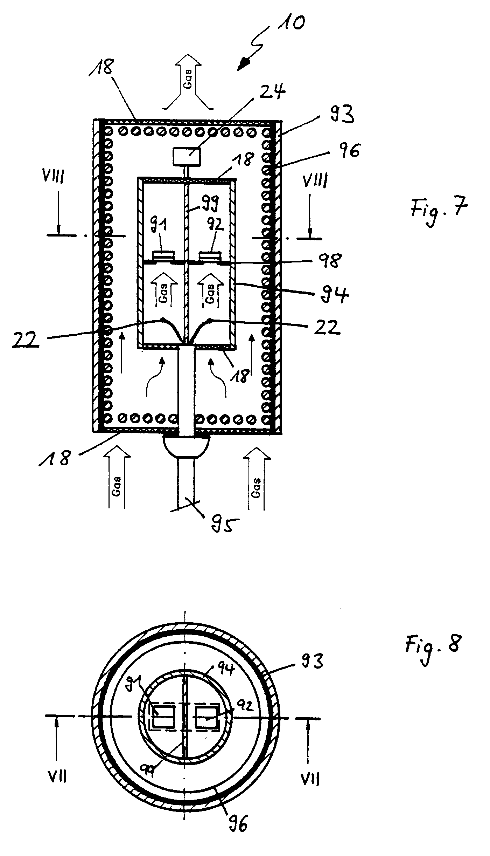

In Fig. 7 ist in schematischer Darstellung ein Sensorsystem 10 mit zwei Sensoren 91 und 92 im Axialschnitt dargestellt. Das Meßgehäuse 93 ist dabei zylindrisch ausgelegt und enthält im Inneren ein ebenfalls zylindrisches Innengehäuse 94. Sowohl das Meßgehäuse 93 wie auch das Innengehäuse 94 weisen im unteren Bereich eine kreisförmige Eintrittsöffnung für die Gasströmung auf, die durch eine Zwangsströmung nach oben aus dem durchmesserkleineren Innengehäuse 94 sowie dem Meßgehäuse 93 austritt. Die Eintritts- und Austrittsöffnungen des Meßgehäuses 93 ebenso wie des Innengehäuses 94 sind jeweils mit Filterflächen 18 versehen.

Zur Einstellung der Temperatur der gesamten Gasströmung ist an der Innenfläche des Meßgehäuses 93 eine Heizung 96 mit entsprechenden Heizwendeln sowohl axial als auch über die Eintrittsöffnungen verteilt angeordnet.

Das Sensorsystem 10 ist insgesamt gesehen über eine stilartige Halterung 95 befestigt, die gleichzeitig als Kabelführung zu den Sensoren 91 und 92 bzw. zu den Temperaturfühlern 22 bzw. dem Strömungsrichter 24 ausgelegt ist.

Das Innengehäuse 94 ist durch eine Trennwand 99 in zwei halbkreisflächige Kanäle unterteilt, in denen die jeweiligen Sensoren 91 bzw. 92 auf einem Träger 98 in der Gasströmung angeordnet sind.

Diese räumliche Trennung der Sensoren 91 und 92 gestattet es daher, z.B. den Sensor 91 mit einer Spannung von etwa 1,1 Volt und den Sensor 92 mit einer Spannung von etwa 1,8 Volt zu betreiben. Dies bewirkt, daß der Sensor 91 sozusagen als "Trocken"-Sensor betrieben wird, der den Sauerstoff-Partialdruck ohne Disassoziation von Wasserdampf mißt. Demgegenüber ermittelt man über den Sensor 92 den Sauerstoff-Partialdruck inklusiv der durch Disassoziation des Wasserdampfes entstandenen Sauerstoffatome.

Die Integration dieses Sensorsystems 10 in eine Meßanordnugn 30 erfolgt entsprechend der vorausgehenden Darstellung nach Fig. 3.

Im horizontalen Schnitt gemäß der Fig. 8 ist das Sensorsystem 10 nach Fig. 7 längs der Linie VIII-VIII dargestellt. Gleiche Bezugszeichen betreffen dabei gleiche Bauelemente bzw. Baugruppen. Die Fig. 8 verdeutlicht die koaxiale Anordnung des Meßgehäuses 93 und des radial kleineren Innengehäuses 94 mit der räumlichen Trennung der beiden Sensoren 91 und 92.

Der Aufbau des Sensorsystems 10 und die Auswertung der elektrischen Signale der Sensoren 91 und 92 gestatten es daher, über die Stromdifferenz, die dem Wasserdampfgehalt des zu messenden Gases proportional ist, präzis die Feuchte zu bestimmen. Unter Berücksichtigung des Absolutdruckes sowie der tatsächlichen Temperatur des zu messenden Gases kann dann unter Einbeziehung einer entsprechenden Rechenelektronik auf alle übrigen Feuchtemeßgrößen zurückgerechnet werden. Das Sensorsystem gestattet daher mit diesen langzeitstabilen Strombegrenzungssensoren auf Zirkoniabasis eine schnelle und von Verunreinigungseffekten befreite Feuchtemessung.

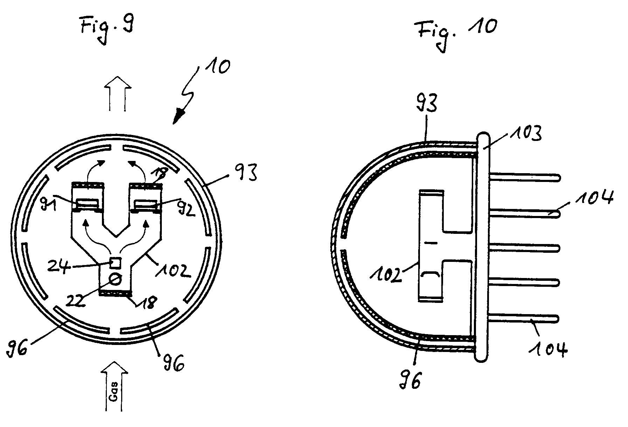

Eine weitere Ausbildungsform eines Sensorsystems 10 ist in Fig. 9 im Horizontalschnitt und in Fig. 10 in einem Axialschnitt dargestellt. Das Meßgehäuse 93 ist dabei domartig gestaltet und umschließt in Draufsicht das etwa Y-förmige Innengehäuse 102. Im Beispiel nach Fig. 9 ist das Meßgehäuse 93 selbst als Filter ausgelegt, an dessen Innenseite sich Heizelemente 96 anschließen, zwischen denen radiale Strömungsöffnungen für das einströmende Gas vorgesehen sind.

Das Innengehäuse 102 wird über ein Filter 18 angeströmt, wobei die Gasströmung sich nach Passieren des Temperaturfühlers 22 und des Strömungsrichters 24 in zwei getrennte Kanäle aufspaltet, in denen die jeweiligen Sensoren 91 bzw. 92 plaziert sind. Die Austrittsöffnungen des Innengehäuses 102 sind ebenfalls mit Filtern ausgestattet.

In der Darstellung nach Fig. 10 wird verdeutlicht, daß das Innengehäuse 102 geeigneterweise im mittleren Bereich des Meßgehäuses 93 etwa tischartig beabstandet zur Anschlußplatte 103 angeordnet ist. Aus dieser Anschlußplatte 103 sind nach rechts die entsprechenden Kontaktstifte 104 herausgeführt.

In der Funktion ist dieses Sensorsystem 10 mit dem vorausgehend beschriebenen vergleichbar. Der Meßgasstrom wird daher zunächst auf die konstante "Abgleichtemperatur" geregelt. Die beiden Sensoren 91 und 92 werden räumlich getrennt in zwei verschiedenen Kanälen mit unterschiedlicher Spannung betrieben, so daß über die in Fig. 6 dargestellten Stromkennlinien die Feuchtigkeit des zu messenden Gases ermittelt werden kann.

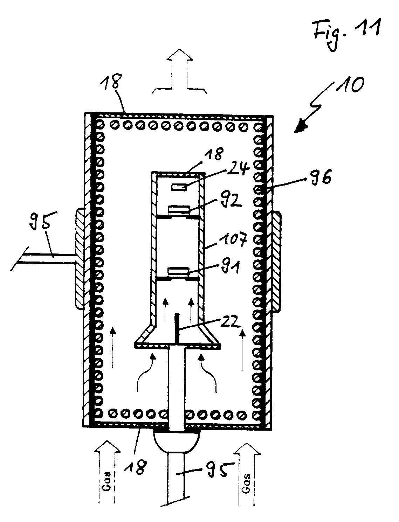

Ein weiteres Ausführungsbeispiel des Sensorsystems 10 ist im Axialschnitt in Fig. 11 dargestellt. Gleiche Bezugszeichen entsprechen daher den Bauelementen entsprechend dem Beispiel nach Fig. 7. Der prinzipielle Aufbau kann mit dem Sensorsystem nach Fig. 7 verglichen werden, wobei jedoch nach Fig. 11 die beiden Sensoren 91 und 92 hintereinander in einem Innengehäuse 107 angeordnet sind.

Der Sensor 91 fungiert in diesem Beispiel sozusagen als "Trocken"-Sensor, der lediglich den Sauerstoffgehalt mißt, d.h. mit einer Spannung von ca. 1,1 Volt betrieben wird.

Der in der Gasströmung nachgeschaltete zweite Sensor 92 fungiert sozusagen als "Feuchte"-Sensor und wird bei einer Spannung von ca. 1,8 Volt betrieben. Hierdurch wird der im zu messende Gas enthaltene Wasserdampf dissoziiert und am Sensor 92 somit der im Gas enthaltene Sauerstoff und die dissoziierten Sauerstoffatome meßtechnisch erfaßt.

Beachtenswert ist, daß diese dissoziierten Sauerstoffatome das Meßergebnis nicht verfälschen, da eine Sensorheizung vorgesehen ist, die der Konvektion eine vorgegebene Richtung erteilt. Über die entsprechende Stromdifferenz läßt sich daher auch an diesem einfachen Beispiel des einkanaligen Innengehäuses sehr präzis und on-line die Feuchtigkeit in einem Gas feststellen.

## Patentansprüche

1. Sensorsystem (10) zur Feuchte- und/oder Sauerstoffmessung in einem Gas, mit zwei räumlich voneinander getrennten Sensoren (91, 92) mit jeweils einer Heizeinrichtung (74) zum Erreichen und Halten einer Betriebstemperatur des Sensors, insbesondere auf Zirkoniumoxid (ZrO₂)-Basis, die eine sauerstoffleitende Platte (62) mit beidseitig vorgesehenen flächigen Elektroden (64,66) und ein mit der Platte (62) gasdicht verbundenes Diffusionsgehäuse (70) mit mindestens einer Gas-Diffusionsöffnung (72) aufweisen, wobei ein Sensor (92) bei die Dissoziation von Wasserdampf bewirkenden Betriebsparametern, insbesondere einer höheren Spannung betrieben wird, während der andere Sensor (91) mit Betriebsparametern, insbesondere niedrigerer Spannung, unterhalb der Dissoziation von Wasserdampf betrieben wird,
dadurch **gekennzeichnet**,
daß die Sensoren (91,92) in einem Meßgehäuse (93) angeordnet sind, und
daß eine Temperaturmeß- und -regeleinrichtung (22) mit einer Heizvorrichtung (96,14) für das zu messende Gas vorgesehen ist.

2. Sensorsystem nach Anspruch 1,
dadurch **gekennzeichnet**,
daß die Sensoren (91,92) in einem im Meßgehäuse (93) vorgesehenen Innengehäuse (94) mit separierter Gasströmung oder hintereinander in der Gasströmung angeordnet sind.

3. Sensorsystem nach Anspruch 1 oder 2,
dadurch **gekennzeichnet**,
daß ein Mikroprozessor mindestens zur Parallelverarbeitung der Ausgangssignale der Sensoren (91,92) vorgesehen ist.

4. Sensorsystem nach einem der Ansprüche 1 bis 3,
dadurch **gekennzeichnet**,
daß eine Einrichtung (52) zur Erzeugung einer Zwangskonvektion durch das Meßgehäuse (12;93) und das Innengehäuse (94) vorgesehen ist.

5. Sensorsystem nach einem der Ansprüche 1 bis 4,
dadurch **gekennzeichnet**,
daß den Sensoren (91,92) und/oder der Temperaturmeß- und -regeleinrichtung (93,96) ein Filter (18), insbesondere aus PTFE-Folie, vorgeordnet ist.

6. Sensorsystem nach einem der Ansprüche 1 bis 5,
dadurch **gekennzeichnet**,
daß die Heizeinrichtung (74) an eine Steuerung angeschlossen ist, die ein langsames, unterschiedliches Aufheizen der Sensoren (91,92) nach dem Einschalten bewirkt.

7. Sensorsystem nach einem der Ansprüche 1 bis 6,
dadurch **gekennzeichnet**,
daß in dem Meßgehäuse (12;93), das eine halbkugelige, kegelige, rechteckige oder zylindrische Form hat, ein mit der Temperaturmeß-Einrichtung verbundener Temperaturfühler (22), der insbesondere zwischen der Heizvorrichtung (96) und den Sensoren (91,92) angeordnet ist und ein Strömungsmeßgerät (24) für das zu messende Gas, vorgesehen ist.

8. Sensoranordnung nach einem der Ansprüche 1 bis 7,
dadurch **gekennzeichnet**,
daß die Heizvorrichtung Heizelemente (96) nahe der Innenwände des Meßgehäuses (12;93) aufweist.

9. Sensorsystem nach einem der Ansprüche 1 bis 8,
dadurch **gekennzeichnet**,
daß der Mikroprozessor mit einem die Elektroden (64,66) der Sensoren (91,92) beaufschlagenden Funktionsgenerator (76) verbunden ist,
daß die Stromkennlinien (I₁, I₂) der Sensoren als Funktion des Sauerstoff- und Wasserdampfgehaltes gespeichert sind, und daß aus der Differenz der Stromwerte beider Sensoren (91,92) der Wasserdampfpartialdruck und Wasserdampfgehalt des zu messenden Gases errechenbar ist.

10. Sensorsystem nach einem der Ansprüche 1 bis 9,
dadurch **gekennzeichnet**,
daß die den Sensoren zugeführte Gasströmung an eine Zufuhr (56) trockenen Gases anschließbar ist.

11. Sensorsystem nach einem der Ansprüche 1 bis 10,
dadurch **gekennzeichnet**,
daß ein Drucksensor (31) zur Messung des Druckes des zu messenden Gases und ein zusätzlicher Temperaturfühler (33) zur Erfassung der ungeregelten Gastemperatur vorgesehen sind.

## Claims

1. Sensor system (10) for moisture and/or oxygen measurement in a gas, with two spatially separated sensors (91, 92), each having a heating means (74) for obtaining and maintaining an operating temperature of the sensor, particularly based on zirconia (ZrO₂), the sensors having an oxygen-conducting plate (62) with flat electrodes (64, 66) on either side and a diffusion casing (70) connected in gas-tight manner to the plate (62) and having at least one gas diffusion opening (72), wherein one sensor (92) is operated with operating parameters bringing about the dissociation of steam and in particular at a higher voltage, whilst the other sensor (91) is operated with operating parameters, particularly a lower voltage, below the steam dissociation,
**characterized** in that,
the sensors (91, 92) are arranged in a measurement casing (93) and
a temperature measuring and regulating device (22) having a heating device (96, 14) is provided for the gas to be measured.

2. Sensor system according to claim 1,
**characterized** in that,
the sensors (91, 92) are arranged in an inner casing (94) located in the measurement casing (93) and having a separate gas flow or are successively positioned in the gas flow.

3. Sensor system according to claim 1 or 2,
**characterized** in that,
there is a microprocessor for at least the parallel processing of the output signals of the sensors (91, 92).

4. Sensor system according to one of the claims 1 to 3,
**characterized** in that,
a device (52) is provided for producing a forced convection through the measurement casing (12, 93) and the inner casing (94).

5. Sensor system according to one of the claims 1 to 4,
**characterized** in that,
a filter (18), particularly of PTFE-sheeting is positioned upstream of the sensors (91, 92) and/or the temperature measuring and regulating device (93, 96).

6. Sensor system according to one of the claims 1 to 5,
**characterized** in that,
the heating means (74) is connected to a control means, which brings about a slow, differing heating of the sensors (91, 92) after switching on.

7. Sensor system according to one of the claims 1 to 6,
**characterized** in that,
in the hemispherical, conical, rectangular or cylindrical measurement casing (12, 93) is provided a temperature sensor (22) connected to the temperature measuring device and which is in particular positioned between the heating device (96) and the sensors (91, 92) and a flow measuring device (24) is provided for the gas to be measured.

8. Sensor system according to one of the claims 1 to 7,
**characterized** in that,
the heating device has heating elements (96) close to the inner walls of the measurement casing (12, 93).

9. Sensor system according to one of the claims 1 to 8,
**characterized** in that,
the microprocessor is connected to a function generator (76) acting on the electrodes (64, 66) of the sensors (91, 92),
the current characteristics (I₁, I₂) of the sensors are stored as a function of the oxygen and steam content, and it is possible to calculate from the difference of the current values of the two sensors (91, 92) the steam partial pressure and steam content of the gas to be measured.

10. Sensor system according to one of the claims 1 to 9,
**characterized** in that,
the gas flow supplied to the sensors can be connected to a dry gas supply (56).

11. Sensor system according to one of the claims 1 to 10,
**characterized** in that,
a pressure sensor (31) is provided for measuring the pressure of the gas to be measured and an additional temperature sensor (33) is provided for determining the unregulated gas temperature.

## Revendications

1. Système capteur (10) pour la mesure de l'humidité et/ou de l'oxgène dans un gaz comprenant deux capteurs (91, 92) séparés l'un de l'autre dans l'espace, munis chacun d'un dispositif de chauffage (74) permettant d'atteindre et de maintenir une température de fonctionnement du capteur notamment à base d'onde de zirconium (ZrO₂), qui présentent une plaque (62) transmettant l'oxygène, munie d'électrodes plates (64, 66) sur les deux faces, et un boîtier de diffusion (70) relié à la plaque (62) à joint étanche aux gaz, possédant au moins une ouverture (72) de diffusion du gaz, dans lequel un capteur (92) est commandé, en présence de paramètres de travail qui déterminent une dissociation de la vapeur d'eau, notamment, une tension plus élevée tandis que l'autre capteur (91) travaille avec des paramètres de travail, notamment une tension plus basse, au-dessous de la dissociation de la vapeur d'eau, ***caractérisé en ce que*** les capteurs (91, 92) sont disposés dans un boîtier de mesure (93), et en ce qu'il est prévu un dispositif de mesure (22) et de régulation de la température muni d'un dispositif de chauffage (96, 14) agissant sur le gaz à mesurer.

2. Système capteur selon la Revendication 1, ***caractérisé en ce que*** les capteurs (91, 92) sont, soit agencés dans un boîtier intérieur (94) prévu dans le boîtier de mesure (93) et comportant des flux de gaz séparés, soit disposés l'un à la suite de l'autre dans le flux gazeux.

3. Système capteur selon la Revendication 1 ou 2, ***caractérisé en ce qu***'il est prévu un micro-processeur pour traiter au moins en parallèle les signaux de sortie des capteurs (91, 92).

4. Système capteur selon une des Revendications 1 à 3, ***caractérisé en ce qu***'il est prévu un dispositif (52) pour produire une convection forcée à travers le boîtier de mesure (12, 93) et le boîtier intérieur (94).

5. Système capteur selon les Revendications 1 à 4, ***caractérisé e**n* ***ce qu***'un filtre (18), notamment fait de pellicule de PTFE est disposé en amont des capteurs (91, 92) et/ou du dispositif (93, 96) de mesure et de régulation de la température.

6. Système capteur selon une des Revendications 1 à 5, ***caractérisé en ce que*** le dispositif de chauffage (94) est connecté à une commande qui détermine un échauffement lent et différencié des capteurs (91, 92) après la mise en marche.

7. Dispositif capteur selon une des Revendications 1 à 6, ***caractérisé en ce qu*****'**il est prévu, dans le boîtier de mesure (12 ; 93) qui possède une forme hémisphérique, conique, rectangulaire ou cylindrique, un palpeur de température (22) connecté au dispositif de mesure de la température, qui est en particulier agencé entre le dispositif de chauffage (96) et les capteurs (91, 92), et un dispositif (24) de mesure du pour le gaz à mesurer.

8. Dispositif capteur selon une des Revendications 1 à 7, ***caractérisé en ce que*** le dispositif de chauffage comprend des éléments chauffants (96) proches des parois intérieures du boîtier de mesure (12 ; 93).

9. Système capteurs selon une des Revendications 1 à 8, ***caractérisé en ce que*** le microprocesseur est connecté à un générateur de fonctions (76) qui attaque les électrodes (64, 66) des capteurs (91, 92), en ce que les courbes d'intensité (I₁, I₂) des capteurs en fonction de la teneur en oxygène et en vapeur d'eau sont enregistrées et en ce qu'à partir de la différence des intensités des deux capteurs (91, 92), on peut calculer la pression partielle de vapeur d'eau et la teneur en vapeur d'eau du gaz à mesurer.

10. Système capteur selon une des Revendications 1 à 9, ***caractérisé en ce que*** le flux gazeux envoyé aux capteurs peut être raccordé à une alimentation (56) en gaz sec.

11. Système capteur selon une des Revendications 1 à 10, ***caractérisé en ce qu***'il est prévu un capteur de pression (31) destiné à la mesure de la pression du gaz à mesurer et un palpeur de température additionnel (33) destiné à capter la température non réglée du gaz.
